# EUROPEAN PATENT SPECIFICATION

(11) **EP 4 352 280 B1**
(45) Date of publication and mention of the grant of the patent: **01.01.2025**
(21) Application number: 22761092.0
(22) Date of filing: 01.08.2022
(51) Int. Cl.: C25B 1/04, C25B 1/34, C25B 9/19, C25B 9/77, C25B 11/052, C25B 11/061, C25B 11/093

(54) **ELECTRODE FOR THE ELECTROLYTIC EVOLUTION OF HYDROGEN**
ELEKTRODE FÜR DIE ELEKTROLYTISCHE WASSERSTOFFENTWICKLUNG
ÉLECTRODE POUR L'ÉVOLUTION ÉLECTROLYTIQUE DE L'HYDROGÈNE

(30) Priority: 02.08.2021 IT 202100020735
(43) Date of publication of application: 17.04.2024
(60) Divisional application: 24216291.5
(73) Proprietor: Industrie De Nora S.P.A., 20134 Milano (IT)
(72) Inventor: CALDERARA, Alice, 20134 Milan (IT); MORA, Stefania, 20134 Milan (IT)
(74) Representative: Reitstötter Kinzebach
(86) International application number: PCT/EP2022/071591
(87) International publication number: WO 2023/012124

(56) References cited:
- EP-A1- 0 298 055
- EP-A1- 2 537 961
- WO-A1-2012/150307
- WO-A1-2014/082843
- WO-A2-2008/043766

## Description

The present invention relates to an electrode and in particular to an electrode suitable for use as a cathode for hydrogen evolution in industrial electrolytic processes and a method for its preparation.

### BACKGROUND OF THE INVENTION

The field of the invention relates to the preparation of a catalytic coating for electrodes used in electrolytic processes for the production of hydrogen, this coating is applied to a metal substrate.

The use of hydrogen for energy production has had an enormous expansion over the years and the economic and effective production of hydrogen has become a fundamental technical problem.

In an increasingly widespread vision of an economy based on the use of hydrogen as an energy carrier, the combination of water electrolysis with renewable energy sources seems to be essential for a sustainable production of hydrogen, correlated with a consequent reduction of carbon dioxide emissions.

Renewable energy sources, such as solar and wind power, are characterized by a variability over time and forecasts of the supply of renewable energy is therefore difficult. It is in fact challenging to predict the energy supply in a defined timeframe. Consequently, this supply is rarely aligned with the demands of energy consumption and use; it is therefore necessary that these renewable energies are combined with a storage system for their effective use. Hydrogen is considered being a suitable storable energy carrier. For example, in sites where wind and solar energy are produced, the excess of electric power not fed directly into the electricity grid can be used to carry out the electrolysis of water for the production of hydrogen, which can be stored and saved for a later use.

In the water electrolysis process, electric current is applied to split the water into its components, oxygen and hydrogen. The process consists of two semi-reactions, the oxygen evolution reaction which occurs at the anode and the hydrogen evolution reaction which occurs at the cathode. The main challenge in achieving these two semi-reactions is to overcome their slow kinetics. Unfortunately, the kinetic complexities exhibited by these reactions require an excess in the cell voltage beyond their thermodynamic potential (denoted "overpotential" or "overvoltage") in order to obtain a high efficiency of the process. In order to reduce overpotential, the electrodes used in water electrolysis are provided with catalytic coatings.

In most electrolysis processes, the cost of producing the desired product is largely determined by the cost of the materials used in the catalytic coatings applied to substrates that act as electrodes and their catalytic activity for the desired reaction. In water electrolysis, noble metals such as rhodium, platinum and ruthenium offer low overpotential and excellent catalytic activity for the hydrogen evolution reaction, although their scarcity, coupled with the resulting high costs, limit their application at large-scale to economically generate high purity hydrogen. Therefore, it is important to explore alternatives with low quantities of noble metals and at low cost.

Furthermore, due to the fluctuating and intermittent behavior of the renewable energies, water electrolysis systems have to be adapted to a dynamic operation, indeed many cycles of startup and shutdown of the system may happen; in addition, power supply interruptions due to technical problems often occur. It results in harmful polarity reversals for the electrodes, whose lifetime can be negatively influenced, and the degradation may be accelerated.

Generally, the current reversals are avoided by using external protective polarization systems, but in a perspective of cost containment and reduction of the whole process, the tendency is to completely avoid the use of external polarization systems with a consequent negative effect on electrodes lifetime.

Among several water electrolysis processes, the electrolysis of alkaline solutions for the production of hydrogen is one of the best-known methods, which indeed has advantages in terms of flexibility, availability and high purity of hydrogen produced. However, to obtain a widespread use, the production of hydrogen by electrolysis of alkaline solutions requires improvements in terms of process efficiency for reducing energy consumption, safety, durability, reliability and, above all, a reduction in installation and operating costs.

In terms of process efficiency, a reduced energy consumption, obtained by a reduction of cell voltage, is essential for market competitiveness.

The reduction of the aforesaid cell voltage can be largely achieved by using anodes and cathodes with catalytic coatings suitable to facilitate the required electrochemical processes. These catalytic coatings play a very important role in improving the efficiency of the water electrolysis process for the production of hydrogen because they lead the path of the reactions of hydrogen and oxygen evolution towards a lower activation energy.

In particular, the cathode coating represents a significant element to achieve this voltage reduction.

Over the years, the use of activated electrodes with a catalytic coating capable of reducing the cathodic overvoltage of hydrogen has become widespread; good results have been obtained using metal substrates such as, for example, nickel, copper, or the steel itself, provided with catalytic coatings based on oxides of rhodium, platinum, or ruthenium.

A further crucial factor affecting the economic convenience of using electrodes activated with catalytic coatings based on noble metals, concerns the electrodes' operating life at high current densities.

Most of the catalytic coatings based on noble metals tend to suffer of serious damage because of current reversals that can occur, among other things, in the event of inefficiencies on industrial plants; the flow of anodic current with consequent raising of the electrode potential to high values, can cause the uncontrolled dissolution, for example, of ruthenium.

A partial resolution to this problem was obtained by adding elements from the rare earth group to the formulation of the catalytic coating. The cathodes having these coatings prove to be sufficiently resistant at the normal plant operating conditions, however, showing a non-optimal duration.

A further improvement in the resistance to current reversals has been obtained by applying to the metal substrate a catalytic coating consisting of distinct phases, including platinum, rhodium and / or palladium. However, this type of coating requires high loads of platinum and rhodium in the catalytic phase, such as to cause a rather high production cost. International patent application WO 2008/043766 A2 describes a cathode suitable for hydrogen evolution in chlor-alkali electrolysis, consisting of a nickel substrate provided with a coating comprising a protective zone containing palladium and a physically distinct catalytic activation containing platinum or ruthenium optionally mixed with a highly oxidizing metal oxide like chromium or praseodymium oxide.

European patent application EP 0298055 A1 describes a cathode for electrolysis of a sodium chloride aqueous solution comprising a conductive base having a nickel surface and having provided thereon at least one platinum group component and at least one cerium component.

International patent application WO 2012/150307 A1 describes a cathode suitable for hydrogen evolution in an electrolysis process comprising a metal substrate coated with an external catalytic layer containing crystalline ruthenium oxide having a highly ordered rutile-type structure. The catalytic outer layer may contain rare earth oxides, such as praseodymium. The electrode may also comprise an internal catalytic thin layer platinum-based, which gives an enhanced protection against accidental current reversal events. International patent application WO 2014/082843 A1 describes a cathode for hydrogen evolution in electrolytic processes comprising a metallic substrate, an internal catalytic layer containing rhodium and an external catalytic layer containing ruthenium.

European patent application EP 2537961 A1 describes a cathode for the electrolysis of an aqueous alkali metal halide solution, comprising a nickel substrate, a mixture layer including metal nickel, a nickel oxide and carbon atoms, and an electrode catalyst layer including a platinum group metal or a platinum group metal compound.

In the electrolytic process industry, the main driver of competitiveness is sought in the reduction of electrical voltage. The cathode coating represents a significant element to achieve this reduction, however all the changes that lead to an improvement in the electrical voltage frequently result in a much weaker coating at the current reversals that can occur accidentally in the event of outages on industrial plants.

There is therefore the need to have a new cathodic composition for industrial electrolytic processes, in particular for electrolytic processes with cathodic evolution of hydrogen, characterized by excellent catalytic activity at high current density, with an overall cost much lower in terms of raw materials and a duration and resistance to accidental current inversions higher than the usual operating conditions.

The present invention has the purpose of solving the problems described above and relates to a cathode characterized by a low hydrogen overvoltage and excellent resistance to repeated current reversals, even in the absence of external polarization systems, when the electrolysis is interrupted, combined with a low-cost. The invention also relates to a method for producing the same and an electrolyser which contains it.

### SUMMARY OF THE INVENTION

The present invention solves the aforementioned problem by providing an electrode having a catalytic coating, especially a cathode, with a high strength, in terms of resistance to inversions, while maintaining an excellent cell voltage.

The present invention provides an electrode and in particular an electrode suitable for use as a cathode for the generation of hydrogen comprising a metal substrate having a catalytic coating thereon, wherein said catalytic coating comprises at least a first protective layer in direct contact with the substrate and a second layer applied on top of said first protective layer.

The term "in direct contact" means that the first protective layer is applied directly onto the surface of the substrate with no intervening layers between substrate and first protective layer. The term "applied on top of" denotes a direction away from the surface of substrate, i.e. the second layer is onto the side of the first protective layer opposite of the substrate. One of the problems encountered in electrodes subjected to a high number of current inversions is the oxidation of the metal substrate during the current inversion phase, that is, when the electrodes suitable for use as cathodes are subjected to an anode current. The continuous, and repeated, current inversions cause a progressive growth of oxide between the substrate and the catalytic coating, leading to a progressive decay of the cell voltage. The inventors have found that the presence of a first protective layer in direct contact with the substrate allows to solve the aforementioned problem by protecting the metal substrate and preventing, or slowing down, the formation of oxide(s) of the metal(s) of said metal substrate.

The formation of an oxide during the electrolysis process can cause, among other things, a poor adhesion of the catalytic coating to the support, thus entailing a rapid degradation of the catalytic coating itself.

Said first protective layer is preferably thin, with a thickness of between 0.05-0.3 microns (µm).

According to the present invention, the metal substrate can be any metal suitable for use as an electrode support for electrochemical processes. In particular, as a metal substrate for a cathode to be used in water electrolysis processes and chlor-soda electrolysis. In this case, the most commonly used metal substrates can be chosen from nickel, nickel alloys, copper, and steel.

Under a first aspect, the present invention relates to an electrode for gas evolution in electrochemical processes as defined in claim 1, i.e. comprising a metal substrate provided with a catalytic coating, said catalytic coating comprising a first protective layer in direct contact with the substrate comprising platinum, in the form of metal or its oxides, and a second layer applied on top of said first protective layer comprising platinum, palladium and an element selected from the rare earth group, in the form of metals or their oxides.

The presence of the first protective layer in direct contact with the substrate has the advantage of significantly improving the tolerance of the electrode to current inversion, surprisingly leading it to values very close to those distinctive of electrodes activated with high quantities of rhodium, which is more robust but much more expensive than other noble metals such as platinum and palladium.

The first protective layer in direct contact with the substrate has a limited amount of platinum, for example between 0.5 and 2 g/m², in the form of metal or oxide.

The use of platinum as the main component of said first protective layer allows to prevent, or at least to slow down, the formation of said oxides directly on the metal substrate.

The presence of one or more elements belonging to the rare earth group in the second layer has the purpose of stabilizing the noble metal matrix, making it more resistant to current inversions that can occur in the electrolysers during uncontrolled shutdown events.

The first protective layer does not require such stabilization and does therefore not require any rare earth elements. According to an embodiment of the electrode according to the present invention, the first protective layer of the catalytic coating consists of platinum.

According to an embodiment of the electrode according to the present invention, the first protective layer of the catalytic coating consists of a mixture of platinum and palladium in which the palladium is up to 40% by weight referred to the metals.

Accordingly, the catalytic coating can consist of a mixture of platinum and palladium in which the platinum compound is 100% to 60% by weight referred to the metals and palladium is 0% to 40% by weight referred to the metals. The term "consists" does not exclude the presence of trace amounts of other metals but their overall concentration would alter the above mentioned ranges, i.e. their overall concentration is below 0.5% by weight referred to the metals.

According to the present invention, the second layer of said catalytic coating comprises 15-40% by weight of platinum and 10-30% by weight of palladium and 40-75% by weight of an element selected from the group of rare earths referred to the elements.

The inventors have surprisingly observed that formulations of this type confer resistance to current reversals several times higher than prior art formulations with a substantially reduced specific noble metal load.

As described above, in one embodiment, the first protective layer comprises substantially 100% platinum. The inventors have observed, through several studies, that platinum is one of the most efficient noble metals in protecting the metal substrate and it allows to obtain unexpectedly improved performances in terms of resistance to inversions.

According to a further embodiment, the invention relates to an electrode wherein the metal chosen from the rare earth group is praseodymium, cerium, or lanthanum.

In a further embodiment, said second layer of said catalytic coating has a composition by weight referred to metals comprising 20-30% of platinum, 15-25% of palladium, and 50-65% of praseodymium.

The experiments conducted by the inventors have shown that praseodymium provides better results than the other elements belonging to the rare earth group, but the invention can also be successfully practiced with cerium and/or lanthanum.

In one embodiment, the first layer of said catalytic coating has a metal weight composition comprising 60-98% platinum and 2-40% palladium and said second layer has a metal weight composition comprising 20- 30% platinum 15-25% palladium and 50-65% praseodymium. The experiments carried out by the inventors have shown that such compositions provide an improvement in hydrogen overvoltage, allowing furthermore the achievement of cell performance to a steady state in less time compared to that generally observed with other compositions.

It is to be understood that the elements present in the catalytic coating can be in the form of metal or in the form of oxides.

In one embodiment, the catalytic coating has a total noble metal load between 2.5 and 7 g/m². Thus, "total noble metal load" refers to the combined noble metal load of the first protective layer and the second layer. The inventors have found that the compositions by weight indicated are able to impart a high catalytic activity combined with an excellent resistance to current reversals.

In a further embodiment, the catalytic coating has a total platinum load of between 2.5 and 6 g/m². The inventors have found that, in the case of the indicated catalytic coating, reduced loads of platinum are more than sufficient to impart a good resistance to current reversals combined with an excellent catalytic activity not found in the prior art of rhodium-based catalytic coatings.

The above provides a significant advantage due to the scarcity of rhodium and its consequent supply and cost problems.

In a further embodiment of the electrode according to the invention, the preferred metal substrate is nickel or nickel alloy.

The electrode of the present invention can be employed in a variety of electrochemical applications. Due to its low hydrogen overvoltage value, the electrode of the present invention is preferably used as cathode for the evolution of hydrogen, in particular as cathode in an electrolysis cell for alkaline water electrolysis.

Under a further aspect, the present invention relates to a method for the preparation of an electrode for the evolution of gaseous products in electrolytic cells, for example for the evolution of hydrogen in alkaline brine electrolysis or water electrolysis cells, comprising the following steps:
(a) application to a metal substrate of a first solution containing precursors of the components of said first protective layer;
(b) optional drying at 30-100 °C for a time between 2 and 60 minutes;
(c) decomposition of said first solution by heat treatment at 450-600 °C;
(d) optional repetition of steps a-c one or more times until the desired load is reached;
(e) application of a second solution containing the precursors of the components of said second layer;
(f) optional drying at 30-100 °C for a time between 2 and 60 minutes;
(g) decomposition of said second solution by heat treatment at 450-600 °C;
(h) optional repetition of stages e-g one or more times until the desired load is reached.

In one embodiment said first solution contains the platinum precursor and said second solution contains the platinum, palladium, and praseodymium precursors.

In a further embodiment, said first solution contains platinum and palladium precursors and said second solution contains platinum, palladium, and praseodymium precursors.

According to an embodiment of the above method, said method comprises an initial treatment step prior to step (a) comprising a heat treatment of said metal substrate for a time of not less than 15 minutes and at a temperature of not less than 450 °C.

The above application of the precursor solutions can be performed by brushing, spraying, dipping or other known technique.

The precursors of said first solution can be selected from the group consisting of nitrates and nitrosyl nitrates of the metals and their mixtures.

The inventors have observed that the use of the specified precursors, in the preparation conditions adopted, favors the formation of a compact protective layer, with a positive impact in terms of protection of the substrate from the formation of oxide, positively influencing its duration and resistance to current reversals.

The precursors of said second solution are compounds selected from the group consisting of metal chlorides, nitrates, nitrosyl nitrates and their mixtures.

The inventors have observed that the use of the specified precursors, under the conditions of preparation adopted, favors the formation of catalysts with a particularly ordered crystal lattice, with a positive impact in terms of activity, duration, and resistance to current inversions.

Under a further aspect, the invention relates to a cell for the electrolysis processes comprising an anodic compartment and a cathodic compartment, separated by an ion exchange membrane or a diaphragm where the cathodic compartment is equipped with an electrode according to anyone of the forms as described above. The cell can be used as a cell for the electrolysis of water. In such an embodiment, the electrode of the present invention is used as a cathode for hydrogen evolution.

Under a further aspect, the invention relates to an electrolyser comprising a modular arrangement of cells, wherein each cell is a cell as defined above. The electrolyser can be used for the production of hydrogen by electrolysis of water comprising an anodic compartment and a cathodic compartment separated by an ion exchange membrane or a diaphragm where the cathodic compartment is equipped with an electrode according to anyone of the forms as described above.

The cell of the present invention can also be used as a cell for the electrolysis of alkaline solutions comprising an anodic compartment and a cathodic compartment, separated by a diaphragm wherein the cathodic compartment is equipped with an electrode according to any one of the forms described above used as cathode by evolution of hydrogen.

Under a further aspect, the electrolyser of the present invention can also be used as an electrolyser for the production of hydrogen and oxygen starting from alkaline solutions comprising a modular arrangement of electrolytic cells with the anodic and cathodic compartments separated by ion exchange membranes or diaphragms, where the cathodic compartment comprises an electrode according to any one of the forms as described above used as a cathode.

Under a further aspect, the cell of the present invention can be used as a cell for the electrolysis of alkaline chloride solutions comprising an anodic compartment and a cathodic compartment, separated by an ion exchange membrane or a diaphragm wherein the cathodic compartment is equipped with an electrode according to any one of the forms as described above used as a cathode for hydrogen evolution.

Under a further aspect, the electrolyzer of the present invention relates to an electrolyser for the production of chlorine and alkali starting from alkaline brine comprising a modular arrangement of electrolytic cells with the anodic and cathodic compartments separated by ion exchange membranes or diaphragms, wherein the cathodic compartment comprises an electrode according to any one of the forms as described above used as a cathode.

The following examples are included to demonstrate particular embodiments of the invention, the practicability of which has been extensively verified in the range of values claimed. It will remain clear to those skilled in the art that the compositions and techniques described in the following examples represent compositions and techniques of which the inventors have found a good functioning in the practice of the invention; however, the person skilled in the art will also appreciate that in light of the present description, various changes can be made to the various embodiments described, still giving rise to identical or similar results without departing from the scope of the invention.

### EXAMPLE 1

A nickel mesh of dimensions of 100 mm x 100 mm x 0.89 mm was subjected to a process of sandblasting with corundum, pickling in HCl according to the procedure known in the art. A solution containing a platinum precursor was prepared.

Additionally, a second solution containing precursors of platinum, palladium and praseodymium having a composition expressed in percentage by weight equal to 33% Pt, 17% Pd and 50% Pr was prepared.

The first solution was applied to the nickel mesh by brushing in 3 coats. A drying was carried out at 40-80 °C for about 10 minutes followed by a heat treatment at 500 °C. The mesh was air-cooled before applying the next coat.

Subsequently, the second solution was applied by brushing in 6 coats. After each coat, drying was carried out at 40-80 °C for about 10 minutes followed by a heat treatment at 500 °C. The mesh was air-cooled each time before the application of the next coat.

The procedure was repeated until a total noble metal load of 5.8 g/m² was reached.

The electrode thus obtained was identified as sample E1

### EXAMPLE 2

A nickel mesh of dimensions of 100 mm x 100 mm x 0.89 mm was subjected to a process of sandblasting with corundum, pickling in HCl according to the procedure known in the art. A solution containing platinum and palladium precursors was prepared having a composition expressed as a percentage by weight equal to 94% Pt and 4% Pd.

Additionally, a second solution containing precursors of platinum, palladium and praseodymium having a composition expressed in percentage by weight equal to 28% Pt, 16% Pd and 58% Pr was prepared.

The first solution was applied to the nickel mesh by brushing in 2 coats. A drying was carried out at 40-80 °C for about 10 minutes followed by a heat treatment at 500 °C. The mesh was air-cooled before applying the next coat.

Subsequently, the second solution was applied by brushing in 4 coats. After each coat, drying was carried out at 40-80 °C for about 10 minutes followed by a heat treatment at 500 °C. The mesh was air-cooled each time before the application of the next coat.

The procedure was repeated until a total noble metal load of 5.6 g/m² was reached.

The electrode thus obtained was identified as sample E2.

### EXAMPLE 3

A nickel mesh of dimensions 100 mm x 100 mm x 0.89 mm was subjected to a process of sandblasting with corundum, pickling in HCl according to the procedure known in the art. A solution containing a platinum precursor was prepared.

Additionally, a second solution containing precursors of platinum, palladium and praseodymium having a composition expressed in percentage by weight equal to 35% Pt, 22% Pd and 43% Pr was prepared.

The first solution was applied to the nickel mesh by brushing in 2 coats. A drying was carried out at 40-80 °C for about 10 minutes followed by a heat treatment at 500 °C. The mesh was air-cooled before applying the next coat.

Subsequently, the second solution was applied by brushing in 4 coats. After each coat, drying was carried out at 40-80 °C for about 10 minutes followed by a heat treatment at 500 °C. The mesh was air-cooled each time before the application of the next coat.

The procedure was repeated until a total noble metal load of 5.2 g/m² was reached.

The electrode thus obtained was identified as sample E3.

### COUNTEREXAMPLE 1

A nickel mesh of dimensions 100 mm x 100 mm x 0.89 mm was subjected to a process of sandblasting with corundum, pickling in HCl according to the procedure known in the art. A solution containing precursors of platinum, palladium, praseodymium, and rhodium having a composition expressed in percentage by weight equal to 26% Pt, 16% Pd, 50% Pr and 8% Rh was prepared.

The solution was applied to the nickel mesh by brushing in 6 coats. After each coat, drying was carried out at 40-80 °C for about 10 minutes followed by a heat treatment at 500 °C. The mesh was air-cooled each time before the application of the next coat.

The procedure was repeated until a total noble metal load of 4.7 g/m² was reached.

The electrode thus obtained was identified as a CE1 sample.

### COUNTEREXAMPLE 2

A nickel mesh of dimensions 100 mm x 100 mm x 0.89 mm was subjected to a process of sandblasting with corundum, pickling in HCl according to the procedure known in the art. A first solution containing precursors of platinum, palladium and praseodymium having a composition expressed in percentage by weight equal to 33% Pt, 22% Pd and 45% Pr was prepared.

Additionally, a second solution was prepared containing precursors of platinum, palladium and praseodymium having a composition expressed in percentage by weight equal to 42% Pt, 25% Pd and 33% Pr was prepared.

The first solution was applied to the nickel mesh by brushing in 4 coats. A drying was carried out at 40-80 °C for about 10 minutes followed by a heat treatment at 500 °C. The mesh was air-cooled before applying the next coat.

Subsequently, the second solution was applied by brushing in 4 coats. After each coat, drying was carried out at 40-80 °C for about 10 minutes followed by a heat treatment at 500 °C. The mesh was air-cooled each time before the application of the next coat.

The procedure was repeated until a total noble metal load of 6.3 g/m² was reached.

The electrode thus obtained was identified as a CE2 sample.

### COUNTEREXAMPLE 3

A nickel mesh of dimensions 100 mm x 100 mm x 0.89 mm was subjected to a process of sandblasting with corundum, pickling in HCl according to the procedure known in the art. A solution containing platinum and cerium precursors having a composition expressed as a percentage by weight equal to 60% Pt, 40% Ce was prepared.

The solution was applied to the nickel mesh by brushing in 6 coats. A drying was carried out at 40-80 °C for about 10 minutes followed by a heat treatment at 500 °C. The mesh was air-cooled before applying the next coat.

The procedure was repeated until a total noble metal load of 5.5 g/m² was reached.

The electrode thus obtained was identified as a CE3 sample.

### COUNTEREXAMPLE 4

A nickel mesh of dimensions 100 mm x 100 mm x 0.89 mm was subjected to a process of sandblasting with corundum, pickling in HCl according to the procedure known in the art. A solution containing platinum precursor was prepared.

Additionally, a second solution containing precursors of ruthenium and praseodymium having a composition expressed in percentage by weight equal to 75% Ru and 25% Pr was prepared.

The first solution was applied to the nickel mesh by brushing in one hand. A drying was carried out at 40-80 °C for about 10 minutes followed by a heat treatment at 500 °C. The mesh was air-cooled before applying the next coat.

Subsequently, the second solution was applied by brushing in 7 coats. After each coat, drying was carried out at 40-80 °C for about 10 minutes followed by a heat treatment at 500 °C. The mesh was air-cooled each time before the application of the next coat.

The procedure was repeated until a total noble metal load of 9 g /m² was reached.

The electrode thus obtained was identified as a CE4 sample.

The samples of the examples described above were subjected to functional tests, under hydrogen evolution, in a laboratory cell fed with 32% NaOH at a temperature of 90 °C, furthermore some samples were subsequently subjected to cyclic voltammetry tests in the potential range between -1 to +0.5 V / NHE.

Table 1 reports the initial cathodic potential (not corrected for the ohmic drop value) measured at a current density of 9 kA/m²; the reported values indicate that electrodes with a catalytic coating according to the present invention have a comparable, or even improved, cathodic overvoltage compared to catalytic coatings known in the art.

**TABLE 1:**

| Samples | mV vs NHE |
|---|---|
| E1 | 968 |
| E2 | 972 |
| E3 | 968 |
| CE1 | 991 |
| CE2 | 975 |
| CE3 | 998 |
| CE4 | 980 |

The resistance of the electrodes to current inversions is shown in table 2.

The difference of the cathode potential recorded after a series of current inversions with respect to the initial cathode potential, measured at a current density of 9 kA / m², is reported. The reported values indicate that electrodes with a catalytic coating according to the present invention have excellent resistance to current inversions.

**TABLE 2:**

| Samples | mv vs NHE |
|---|---|
| E1 | 157 |
| E2 | 144 |
| E3 | 166 |
| CE2 | 213 |
| CE3 | 214 |
| CE4 | 205 |

The previous description does not intend to limit the invention, which can be used according to different embodiments without thereby deviating from the purposes and whose scope is uniquely defined by the attached claims.

In the description and claims of the present application, the term "comprises" and "contains" and their variants such as "comprising" and "containing" are not intended to exclude the presence of other elements, components, or additional process steps.

Discussion of documents, records, materials, apparatuses, articles, and the like is included in the text for the sole purpose of providing context to the present invention; However, it is not to be understood that this matter or part of it constituted general knowledge in the field relating to the invention before the priority date of each of the claims attached to this application.

## Claims

1. Electrode for gas evolution in electrochemical processes comprising a metal substrate provided with a catalytic coating, said catalytic coating comprising a first protective layer in direct contact with the substrate, said first protective layer comprising platinum, in the form of metal or its oxides, and a second layer applied on top of said first protective layer, said second layer comprising platinum, palladium and an element selected from the group of rare earths, in the form of metals or their oxides, wherein said second layer comprises 15-40% by weight of platinum and 10-30% by weight of palladium and 40-75% by weight of an element selected from the group of rare earths referred to metals.

2. The electrode according to claim 1 wherein said first protective layer consists of platinum or a mixture of platinum and palladium wherein the palladium is up to 40% by weight referred to metals.

3. The electrode according to any one of claims 1 or 2 wherein the element chosen from the rare earth group is praseodymium, cerium or lanthanum.

4. The electrode according to any one of the preceding claims wherein the catalytic coating has a total noble metal load between 2.5 and 7 g/m².

5. Method for the preparation of an electrode as defined in any one of the preceding claims, comprising the following steps:
(a) application to a metal substrate of a first solution containing precursors of the components of said first protective layer;
(b) optional drying at 30-100 °C for a time between 2 and 60 minutes;
(c) decomposition of said first solution by heat treatment at 450-600 °C;
(d) optional repetition of steps a-c one or more times until the desired load is reached;
(e) application of a second solution containing the precursors of the components of said second layer;
(f) optional drying at 30-100 °C for a time between 2 and 60 minutes;
(g) decomposition of said second solution by heat treatment at 450-600 °C;
(h) optional repetition of stages e-g one or more times until the desired load is reached.

6. Method according to claim 5 wherein said first solution contains the platinum precursor and said second solution contains the platinum, palladium and praseodymium precursors.

7. Cell for the electrolysis processes comprising an anodic compartment and a cathodic compartment separated by an ion exchange membrane or a diaphragm where the cathodic compartment is equipped with an electrode according to any one of claims 1 to 4.

8. Electrolyser comprising a modular arrangement of cells, wherein each cell is equipped according to claim 7.

9. The use of the cell of claim 7 for the production of hydrogen by electrolysis of water or for the production of chlorine and alkali by electrolysis of alkaline brine.

10. The use of the electrolyser of claim 8 for the production of hydrogen by electrolysis of water or for the production of chlorine and alkali by electrolysis of alkaline brine.

## Patentansprüche

1. Elektrode zur Gasentwicklung in elektrochemischen Prozessen, umfassend ein Metallsubstrat, das mit einer katalytischen Beschichtung versehen ist, wobei die katalytische Beschichtung eine erste Schutzschicht in direktem Kontakt mit dem Substrat umfasst, wobei die erste Schutzschicht Platin in Form von Metall oder dessen Oxiden umfasst, und eine zweite Schicht, die auf der ersten Schutzschicht aufgebracht ist, wobei die zweite Schicht Platin, Palladium und ein Element, das aus der Gruppe der Seltenen Erden ausgewählt ist, in Form von Metallen oder deren Oxiden umfasst, wobei die zweite Schicht 15-40 Gew.-% Platin und 10-30 Gew.-% Palladium und 40-75 Gew.-% eines Elements, das aus der Gruppe der Seltenen Erden ausgewählt ist, bezogen auf Metalle umfasst,.

2. Elektrode gemäß Anspruch 1, wobei die erste Schutzschicht aus Platin oder einer Mischung aus Platin und Palladium besteht, wobei das Palladium bis zu 40 Gew.-% bezogen auf Metalle ausmacht.

3. Elektrode gemäß einem der Ansprüche 1 oder 2, wobei das aus der Gruppe der Seltenen Erden ausgewählte Element Praseodym, Cer oder Lanthan ist.

4. Elektrode gemäß einem der vorherigen Ansprüche, wobei die katalytische Beschichtung eine Gesamtedelmetallbeladung zwischen 2,5 und 7 g/m² aufweist.

5. Verfahren zur Herstellung einer Elektrode gemäß einem der vorherigen Ansprüche, umfassend die folgenden Schritte:
(a) Aufbringen einer ersten Lösung, die Vorläufer der Komponenten der ersten Schutzschicht enthält, auf ein Metallsubstrat;
(b) gegebenenfalls Trocknen bei 30-100 °C für eine Zeit zwischen 2 und 60 Minuten;
(c) Zersetzen der ersten Lösung durch Wärmebehandlung bei 450-600 °C;
(d) gegebenenfalls einmaliges oder mehrmaliges Wiederholen der Schritte a-c, bis die gewünschte Beladung erreicht ist;
(e) Auftragen einer zweiten Lösung, welche Vorläufer der Komponenten der zweiten Schicht enthält;
(f) gegebenenfalls Trocknen bei 30-100 °C für eine Zeit zwischen 2 und 60 Minuten;
(g) Zersetzen der zweiten Lösung durch Wärmebehandlung bei 450-600 °C;
(h) gegebenenfalls einmaliges oder mehrmaliges Wiederholen der Stufen e-g, bis die gewünschte Beladung erreicht ist.

6. Verfahren gemäß Anspruch 5, wobei die erste Lösung den Platinvorläufer enthält und die zweite Lösung die Platin-, Palladium- und Praseodymvorläufer enthält.

7. Zelle für Elektrolyseverfahren, umfassend eine anodische Kammer und eine kathodische Kammer, die durch eine Ionenaustauschmembran oder ein Diaphragma getrennt sind, wobei die kathodische Kammer mit einer Elektrode gemäß einem der Ansprüche 1 bis 4 ausgerüstet ist.

8. Elektrolyseur, der eine modulare Anordnung von Zellen umfasst, wobei jede Zelle gemäß Anspruch 7 ausgerüstet ist.

9. Verwendung der Zelle nach Anspruch 7 zur Herstellung von Wasserstoff durch Elektrolyse von Wasser oder zur Herstellung von Chlor und Alkali durch Elektrolyse von alkalischer Sole.

10. Verwendung des Elektrolyseurs nach Anspruch 8 zur Erzeugung von Wasserstoff durch Elektrolyse von Wasser oder zur Erzeugung von Chlor und Alkali durch Elektrolyse von alkalischer Sole.

## Revendications

1. Electrode pour le dégagement gazeux dans des procédés électrochimiques, comprenant un substrat métallique muni d'un revêtement catalytique, ledit revêtement catalytique comprenant une première couche de protection directement en contact avec le substrat, ladite première couche de protection comprenant du platine, sous forme de métal ou de ses oxydes, et une deuxième couche appliquée sur ladite première couche de protection, ladite deuxième couche comprenant du platine, du palladium et un élément choisi dans le groupe des terres rares, sous forme de métaux ou de leurs oxydes, ladite deuxième couche comprenant 15-40% en poids de platine et 10-30% en poids de palladium et 40-75% en poids d'un élément choisi dans le groupe des terres rares, rapporté aux métaux.

2. Electrode selon la revendication 1, dans laquelle ladite première couche de protection est constituée de platine ou d'un mélange de platine et de palladium dans lequel le palladium représente jusqu'à 40 % en poids rapporté aux métaux.

3. Electrode selon l'une quelconque des revendications 1 et 2, dans laquelle l'élément choisi dans le groupe des terres rares est le praséodyme, le cérium ou le lanthane.

4. Electrode selon l'une quelconque des revendications précédentes, dans laquelle le revêtement catalytique a une charge totale de métaux nobles comprise entre 2,5 et 7 g/m².

5. Procédé pour la préparation d'une électrode telle que définie dans l'une quelconque des revendications précédentes, comprenant les étapes suivantes :
(a) application sur un substrat métallique d'une première solution contenant les précurseurs des composants de ladite première couche de protection ;
(b) séchage facultatif à 30-100°C pendant une durée comprise entre 2 et 60 minutes ;
(c) décomposition de ladite première solution par traitement thermique à 450-600°C ;
(d) répétition facultative des étapes a-c une ou plusieurs fois jusqu'à l'obtention de la charge souhaitée ;
(e) application d'une deuxième solution contenant les précurseurs des composants de ladite deuxième couche ;
(f) séchage facultatif à 30-100°C pendant une durée comprise entre 2 et 60 minutes ;
(g) décomposition de ladite deuxième solution par traitement thermique à 450-600°C ;
(h) répétition facultative des étapes e-g une ou plusieurs fois jusqu'à l'obtention de la charge souhaitée.

6. Procédé selon la revendication 5, dans lequel ladite première solution contient le précurseur de platine et ladite deuxième solution contient les précurseurs de platine, de palladium et de praséodyme.

7. Cellule pour les procédés d'électrolyse, comprenant un compartiment anodique et un compartiment cathodique séparés par une membrane échangeuse d'ions ou un diaphragme, où le compartiment cathodique est équipé d'une électrode selon l'une quelconque des revendications 1 à 4.

8. Electrolyseur comprenant un agencement modulaire de cellules, dans lequel chaque cellule est équipée selon la revendication 7.

9. Utilisation de la cellule de la revendication 7 pour la production d'hydrogène par électrolyse de l'eau ou pour la production de chlore et d'alcali par électrolyse d'une saumure alcaline.

10. Utilisation de l'électrolyseur de la revendication 8 pour la production d'hydrogène par électrolyse de l'eau ou pour la production de chlore et d'alcali par électrolyse d'une saumure alcaline.
